(19) **Europäisches Patentamt**
**European Patent Office**
**Office européen des brevets**

(11) **EP 4 004 510 B1**

(12) **EUROPÄISCHE PATENTSCHRIFT**

(45) Veröffentlichungstag und Bekanntmachung des Hinweises auf die Patenterteilung:
**26.03.2025 Patentblatt 2025/13**

(21) Anmeldenummer: **20746164.1**

(22) Anmeldetag: **23.07.2020**

(51) Internationale Patentklassifikation (IPC):
**G01L 1/20** (2006.01)   **D03D 1/00** (2006.01)

(52) Gemeinsame Patentklassifikation (CPC):
**G01L 1/205;** D05D 2303/40; D10B 2401/16

(86) Internationale Anmeldenummer:
**PCT/EP2020/070768**

(87) Internationale Veröffentlichungsnummer:
**WO 2021/013918 (28.01.2021 Gazette 2021/04)**

(54) **GESTICKTER SENSOR**

STITCHED SENSOR

CAPTEUR BRODÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.07.2019 DE 102019120191**

(43) Veröffentlichungstag der Anmeldung:
**01.06.2022 Patentblatt 2022/22**

(73) Patentinhaber: **Deutsche Institute für Textil- und Faserforschung Denkendorf**
**73770 Denkendorf (DE)**

(72) Erfinder:
• **KIM, Sarah**
**75365 Calw-Stammheim (DE)**
• **HOFMANN, Paul**
**89257 Illertissen (DE)**

(74) Vertreter: **Rüger Abel Patentanwälte PartGmbB**
**Webergasse 3**
**73728 Esslingen a. N. (DE)**

(56) Entgegenhaltungen:
GB-A- 2 343 516     US-A1- 2003 119 391
US-A1- 2008 307 899

**Beschreibung**

Die Erfindung betrifft einen Sensor, der dazu eingerichtet ist, eine auf den Sensor einwirkende Kraft zu erfassen und/oder zu messen. Der Sensor arbeitet vorzugsweise piezoresistiv. Der Sensor kann eine einwirkende Druckkraft oder Biegekraft feststellen bzw. messen. Er ist insbesondere auf einem flexiblen Träger angeordnet, der beispielsweise aus einem Textilmaterial gebildet sein kann. Als Textilmaterial kann beispielsweise ein gewebtes Textilmaterial und/oder ein gestricktes Textilmaterial und/oder ein gewirktes Textilmaterial und/oder ein Vliesmaterial verwendet werden.

US 2003/0119391 A1 offenbart einen Sensor zur Erfassung einer einwirkenden Kraft. Der Sensor kann ein Textilmaterial mit einer ersten Elektrode aus ersten Leitern und einer zweiten Elektrode aus zweiten Leitern aufweisen. Bei einem Ausführungsbeispiel können die Leiter in einer Matrixgestalt durch Sticken angeordnet werden.

Aus GB 2 343 516 A ist ein textiler Drucksensor mit leitfähigen Schichten oder Streifen und einem trennenden Isolator bekannt. Die Schichten können durch Weben oder Stricken hergestellt sein.

Der aus US 2008/0307899 A1 bekannte Drucksensor ist zur Integration in textile Produkte eingerichtet. Der Drucksensor hat einen mehrschichtig aufgebauten Faden, wobei eine Schicht eine drucksensitive Schicht ist. Der Faden durch Weben, Stricken, Wirken oder Nähen in das textile Produkt integriert werden können.

US 2016/0328043 A1 beschreibt einen Sensor, bei dem ein leitfähiges Muster auf einen flexiblen Träger gestickt ist. Der Sensor ist als kapazitiver Sensor ausgebildet. Bei einer Ausführungsform weist das leitfähige Muster leitfähige Knotenpunkte auf. Eine Deckschicht weist leitfähige Gegenkontakte auf. Zwischen der Deckschicht und dem Träger ist benachbart zu den leitfähigen Knoten und den Gegenkontakten eine Zwischenschicht vorhanden, um einen Abstand zwischen einem Knoten und einem gegenüberliegenden Gegenkontakt herzustellen, solange keine Kraft auf die Deckschicht einwirkt. Beim Eindrücken der Deckschicht gelangt der Gegenkontakt zur Anlage mit dem Knoten und kann eine elektrische Verbindung herstellen. Bei einer solchen Anordnung kann beispielsweise eine Tastatur gebildet werden.

US 9 816 799 B2 offenbart einen Deformationssensor mit einem elektrisch leitfähigen Element, das auf einen Textilträger aufgebracht oder in einen Textilträger eingearbeitet ist. Verformungen des Textilträgers können erkannt werden, weil sich dadurch der Abstand von Abschnitten des elektrisch leitfähigen Elements ändert. Das elektrisch leitfähige Element kann beispielsweise mäanderförmig angeordnet sein. Alternativ können auch zwei elektrisch leitfähige Elemente in einer interdigitalen Anordnung vorhanden sein.

US 2017/0261388 A1 beschreibt einen Drucksensor aus Interdigitalelektroden, die auf einen Träger gedruckt sind. Das Drucken von Elektroden ist nicht auf allen Arten von Trägern ohne weiteres möglich. Abhängig vom Aufbau und dem Material des Trägers kann es durch Kapillareffekte zu Fehlern beim Drucken der Elektroden kommen, beispielsweise bei Textilträgern.

US 8 701 578 B2 beschreibt ein Kleidungsstück, bei dem Stickmuster zur Herstellung eines elektrisch leitfähigen Kommunikationspfades aufgebracht sind. An diese gestickten Kommunikationspfade können Sensoren angeschlossen werden.

Interaktive Textilien sind in US 2016/0048235 A1 beschrieben. Dabei handelt es sich um ein Gewebe mit leitfähigen Fäden, wobei ein mehrlagiger Aufbau zur Bildung eines kapazitiven Drucksensors vorgeschlagen wird.

US 7 770 473 B2 offenbart einen Drucksensor aus einem mehrschichtigen Garn mit leitfähigen Fasern und einer druckempfindlichen Schicht. Ein solches mehrschichtiges Garn kann als Stehfaden in ein Gestrick eingearbeitet werden. Der Drucksensor wird dabei durch das mehrschichtige Garn selbst gebildet.

Aus US 8 505 474 B2 ist ein Verfahren zur Herstellung eines leitenden Garns bekannt. Dabei werden metallische Fasern mit nicht leitenden Filamenten ummantelt.

Ein weiteres bekanntes Prinzip zur Herstellung eines Sensors ist die Bildung einer Sandwichstruktur aus mehreren separaten Lagen. Solche Sensoren sind beispielsweise aus US 7 145 432 B2 oder US 8 661 915 B2 oder US 8 904 876 B2 bekannt.

Außerdem offenbaren US 2004/0173028 A1 sowie DE 10 2013 001 772 A1 die Möglichkeit, Drucksensoren in Oberflächen in einem Fahrzeug zu integrieren.

Die Firma Interlink Electronics bietet unter dem Namen FFR® einen Tastsensor mit einem variablen Widerstand an. Dieser besteht aus mehreren Polymerlagen, die durch Laminieren verbunden werden. Eine Polymerlage ist mit interdigitierenden Elektroden beschichtet, während die andere Polymerlage mit einem speziellen Halbleitermaterial beschichtet ist. Durch Druckeinwirkung können die Elektroden über das Halbleitermaterial parallel geschaltet werden.

Weitere Hintergrundinformationen zu textilbasierten Sensoren sind aus der Fachliteratur zu entnehmen:

- BOSOWSKI, P., et al., "Design and manufacture of textile-based sensors",Electronic Textiles, Elsevier, 2015, S. 75-107.

- MEYER, Jan; LUKOWICZ, Paul; TROSTER, Gerhard, "Textile pressure sensor for muscle activity and motion detection", Wearable Computers, 10th IEEE International Symposium, S. 69-72, 2006.

- MEYER, Jan, et al., "Design and modeling of a textile pressure sensor for sitting posture classification", IEEE Sensors Journal 10 (8), S. 1391-1398, 2010.

- LINZ, Torsten; GOURMELON, Lena; LANGEREIS, Geert, "Contactless EMG sensors embroidered onto textile", 4th International Workshop on Wearable and Implantable Body Sensor Networks, Berlin, Heidelberg, Springer, 2007, S. 29-34.

- MECNIKA, V., et al., "Joining technologies for electronic textiles",Electronic Textiles, Elsevier, 2015, S. 133-153.

- HASANI, M., et al., "Implementation of a dual-interrogationmode embroidered RFID-enabled strain sensor", IEEE Antennas and Wireless Propagation Letters 12, S. 1272-1275, 2013.

- ZHANG, Lanlin, et al., "Embroidered textiles for RF electronics and medical sensors", Wireless Information Technology and Systems (ICWITS),2012 IEEE International Conference, S. 1-4, 2012.

- KOO, Hye Ran, et al., "The effect of textile-based inductive coil sensor positions for heart rate monitoring", Journal of medical systems 38 (2), S. 2, 2014.

- MECNIKA, Viktorija, et al., "Preliminary Study on Textile Humidity Sensors", Smart SysTech 2015; European Conference on Smart Objects, Systems and Technologies; Proceedings of. VDE9, S. 1-9, 2015.

- GRIES, Thomas; KLOPP, Kai (Hg.), "Füge- und Oberflächentechnologien für textilien: Verfahren und anwendungen", Springer-Verlag, 2007.

Ausgehend vom bekannten Stand der Technik ist es eine Aufgabe der vorliegenden Erfindung einen Sensor zur Erfassung einer Druckkraft und/oder eine Biegekraft zu schaffen, der sich mit einfachen Mitteln kostengünstig herstellen lässt.

Diese Aufgabe wird durch einen Sensor mit den Merkmalen des Patentanspruches 1 gelöst.

Der erfindungsgemäße Sensor ist dazu eingerichtet, ein auf den Sensor einwirkende Kraft zu erfassen und/oder zu messen. Im einfachsten Fall kann eine digitale Erfassung der einwirkenden Kraft erfolgen. Bei einer Ausführungsform des Sensors kann eine vom Betrag der einwirkenden Kraft abhängige Sensorgröße, insbesondere elektrische Sensorgröße durch den Sensor erzeugt werden. Vorzugsweise arbeitet der Sensor hierzu piezoresistiv. Der Sensor kann beispielsweise als Drucksensor oder Biegesensor verwendet werden.

Der Sensor weist einen Träger auf. Der Träger ist vorzugsweise aus einem flexiblen Material. Der Träger ist ein Flächenelement, das im Wesentlichen 2-dimensional oder 2,5-dimensional ausgebildet ist. Darunter ist ein Flächenelement zu verstehen, das eine Dicke aufweist, die um mindestens eine Größenordnung kleiner ist als die Länge und die Breite in einer Ebene, in der sich der Träger erstreckt. Als Träger kann beispielsweise ein Textilmaterial verwendet werden, wie etwa ein Gewebe, ein Gestrick, ein Gewirke oder ein Vliesmaterial bzw. beliebige Kombinationen davon. Der Träger bzw. das Textilmaterial ist vorzugsweise einlagig ausgeführt.

Auf den Träger sind eine erste Elektrode und eine zweite Elektrode durch Sticken gebildet. Die Elektroden werden durch das Sticken nicht nur auf dem Träger befestigt, sondern sind durch den gestickten Faden auf dem Träger gebildet. Eine erste Elektrode ist durch Sticken wenigstens eines ersten Fadens auf dem Träger gebildet und eine zweite Elektrode ist durch Sticken wenigstens eines zweiten Fadens auf dem Träger gebildet. Der wenigstens eine erste Faden und der wenigstens eine zweite Faden weisen elektrisch leitfähige Bestandteile auf oder sind durch solche elektrisch leitfähigen Bestandteile gebildet. Solche Bestandteile können durch Fasern und/oder mindestens ein Filament und/oder einen Füllstoff und/oder eine Beschichtung gebildet sein. Der wenigstens eine erste Faden und/oder der wenigstens eine zweite Faden können als Garn oder Zwirn ausgebildet sein, wobei ein Zwirn aufgrund der besseren Stickbarkeit bevorzugt wird.

Die beiden Elektroden sind mit Abstand zueinander auf dem Träger angeordnet, so dass der wenigstens eine erste Faden und der wenigstens eine zweite Faden nicht unmittelbar in Kontakt miteinander auf dem Träger angeordnet sind. Die durch das Sticken gebildeten Elektroden sind vorzugsweise auf einer gemeinsamen Seite des Trägers angeordnet und befinden sich vorzugsweise in einer gemeinsamen Lage direkt an der betreffenden Seite des Trägers. Abhängig davon, ob der Träger in einer Ebene ausgerichtet ist oder gekrümmt oder geknickt verläuft, können auch die erste und/oder die zweite Elektrode eben oder gekrümmt oder geknickt entlang der Oberfläche des Trägers verlaufen.

Der gestickte Sensor hat außerdem eine Deckschicht, die durch wenigstens einen auf dem Träger gestickten dritten Faden gebildet ist. Wie bei den Elektroden ist die Deckschicht nicht als separates Element ausgeführt, das durch Sticken am Träger befestigt wird, sondern wird durch das Sticken mit wenigstens einem dritten Faden gebildet. Der wenigstens eine dritte Faden weist elektrisch leitfähige Bestandteile auf. Der wenigstens eine dritte Faden kann durch ein Garn oder bevorzugt ein Zwirn gebildet sein. Er liegt an mehreren Kontaktstellen am wenigstens einen ersten Faden der ersten Elektrode und am wenigstens einem zweiten Faden der zweiten Elektrode an. Vorzugsweise ist an jeder Kontaktstelle zwischen dem Abschnitt des wenigstens einen dritten Fadens und dem Träger ein Abschnitt des wenigstens einen ersten oder zweiten Fadens angeordnet.

Abhängig von einer auf die Deckschicht einwirkenden Kraft, die durch Druck oder Biegen erzeugt werden kann, ändert sich die elektrische Leitfähigkeit zwischen der ersten Elektrode und der zweiten Elektrode des Sensors. Dadurch kann eine einwirkende Kraft erkannt und/oder gemessen werden.

Der gesamte Sensor kann somit durch Sticken hergestellt werden. Sticken ist ein Verfahren, das ohne aufwendige Produktionsmittel mit einer Nähmaschine oder Stickmaschine ausgeführt werden kann. Durch Sticken der Fäden auf dem Träger werden die beiden Elektroden sowie die Deckschicht erzeugt und ein Sensor hergestellt. Die Elektroden und die Deckschicht, die beim Sticken hergestellt werden, lassen sich auf viele verschiedene Trägermaterialien aufbringen und auch auf Trägermaterialien, die aufgrund ihrer Kapillarwirkung für das Drucken ungeeignet sind. Das Erzeugen von mehreren Sensorschichten oder Sensorlagen und das anschießende Verbinden dieser Sensorschichten oder Sensorlagen sind nicht erforderlich. Der Sensor kann in einem fortlaufenden Prozess in einer einzigen Nähmaschine oder Stickmaschine hergestellt werden. Es ist gegebenenfalls lediglich zweckmäßig für das Sticken der Elektroden und der Deckschicht unterschiedliche Fäden zu verwenden. Bei Stickmaschinen mit mehreren Köpfen kann ein solcher Fadenwechsel sehr schnell und einfach durchgeführt werden.

Vorzugsweise haben zumindest nicht alle Fäden und insbesondere nicht der wenigstens eine erste Faden zur Bildung der ersten Elektrode und auch nicht der wenigstens eine zweite Faden zur Bildung der zweiten Elektrode eine eigene Sensoreigenschaft. Die Sensorfunktion wird erfindungsgemäß nicht durch einen der Fäden, sondern durch das Zusammenwirken der Fäden der Elektroden und der Deckschicht erreicht.

Bevorzugt hat der wenigstens eine dritte Faden eine elektrische Leitfähigkeit, die verschieden ist von der elektrischen Leitfähigkeit des wenigstens einen ersten Fadens und/oder des wenigstens einen zweiten Fadens. Insbesondere hat der wenigstens eine dritte Faden eine elektrische Leitfähigkeit, die kleiner ist als die elektrische Leitfähigkeit des wenigstens einen ersten Fadens und/oder des wenigstens einen zweiten Fadens. Der wenigstens eine erste Faden und der wenigstens eine zweite Faden können dieselbe elektrische Leitfähigkeit aufweisen und können insbesondere identisch sein.

Der wenigstens eine erste Faden und/oder der wenigstens eine zweite Faden und/oder der wenigstens eine dritte Faden können elektrisch leitende Fasern und/oder Füllstoffe und/oder wenigstens ein elektrisch leitendes Filament und/oder eine elektrisch leitende Beschichtung aufweisen. Als elektrisch leitfähiges Material für die Fasern oder Füllstoffe oder Filamente oder Beschichtung können Silber, Edelstahl, Kohlenstoff, bzw. Ruß oder andere bekannte Materialien bzw. Kombinationen davon verwendet werden.

Bei einem Ausführungsbeispiel hat der Sensor einen Gesamtwiderstand zwischen einem ersten Anschluss der ersten Elektrode und einem zweiten Anschluss an der zweiten Elektrode, dessen Betrag abhängig ist von einer auf die Deckschicht einwirkenden Kraft. Diese Kraft kann durch Druck oder Biegen des Trägers bzw. Sensors bewirkt werden. Dabei kann der Gesamtwiderstand von einem ersten Übergangswiderstand zwischen dem wenigstens einen ersten Faden der ersten Elektrode und dem wenigstens einen dritten Faden der Deckschicht und von einem zweiten Übergangswiderstand zwischen dem wenigstens einen zweiten Faden der zweiten Elektrode und dem wenigstens einen dritten Faden der Deckschicht abhängen. Zusätzlich kann der Gesamtwiderstand auch von einem Durchgangswiderstand des wenigstens einen dritten Fadens abhängen, dessen Betrag abhängig sein kann von der einwirkenden Kraft und der daraus resultierenden Verformung des wenigstens einen dritten Fadens. Somit kann der Gesamtwiderstand durch wenigstens eine Reihenschaltung aus einem ersten Übergangswiderstand, einem zweiten Übergangswiderstand und einem - optional veränderbaren - Durchgangswiderstand gebildet sein. Es können auch mehrere von solchen Reihenschaltungen parallel zueinander geschaltet sein, die dann den Gesamtwiderstand zwischen dem ersten Anschluss und dem zweiten Anschluss bestimmen. Dies hängt beispielsweise davon ab, wie groß die Stelle ist, an der die Kraft einwirkt, und wie viele Kontaktstellen durch die Krafteinwirkung beeinflusst werden.

Die erste Elektrode hat eine erste Basiszone und mehrere von der ersten Basiszone wegragende erste Elektrodenfinger. Zwischen zwei unmittelbar benachbarten ersten Elektrodenfingern ist jeweils ein erster Zwischenraum gebildet. Analog hierzu weist die zweite Elektrode eine zweite Basiszone und mehrere von der zweiten Basiszone wegragende zweite Elektrodenfinger auf. Zwischen zwei unmittelbar benachbarten zweiten Elektrodenfingern ist jeweils ein zweiter Zwischenraum gebildet.

Bei einer Ausführungsform können mehrere erste Fäden zum Sticken der ersten Elektrode und/oder mehrere zweite Fäden zum Sticken der zweiten Elektrode verwendet werden. Dadurch können unterschiedliche Bereiche der ersten Elektrode bzw. der zweiten Elektrode aus unterschiedlichen Materialien hergestellt bzw. gestickt werden. Zum Beispiel kann die Basiszone aus einem anderen Fadenmaterial gestickt werden als die Elektrodenfinger der ersten Elektrode und/oder der zweiten Elektrode. Diese Ausgestaltung kann beispielsweise von besonderem Vorteil sein, wenn der Sensor in Form eines Potentiometers ausgestaltet ist.

Die ersten Elektrodenfinger sind bevorzugt parallel zueinander ausgerichtet. Die zweiten Elektrodenfinger sind vorzugsweise parallel zueinander ausgerichtet. Es ist weiter vorteilhaft, wenn die ersten Elektrodenfinger und die zweiten Elektrodenfinger parallel zueinander verlaufen. Dabei kann wenigstens ein zweiter Elektrodenfinger in einen ersten Zwischenraum hineinragen und wenigstens ein erster Elektrodenfinger kann in einen zweiten Zwischenraum hineinragen. Es wird sozusagen eine Interdigitalanordnung der beiden Elektroden erreicht. Bevorzugt ist der Abstand zwischen den ersten Elektrodenfingern und den jeweils benachbarten zweiten Elektrodenfingern gleich groß. Es ist vorteilhaft, wenn die Elektrodenfinger in regelmäßigen Abständen angeordnet sind.

Anstelle der Interdigitalanordnung der Elektroden können die Elektroden auch eine andere Form aufweisen. Beispielsweise können die Elektrodenfinger und/oder die Basiszonen wenigstens eine Krümmungsstelle und/oder wenigstens eine Knickstelle aufweisen. Die Basiszonen können linienhaft sein (die Breite kann z.B. mindestens um den Faktor 5-10 kleiner sein als die Länge) oder auch eine Fläche umschließen oder ausfüllen, beispielsweise eine kreisförmige oder polygonale Fläche.

Bei einem Ausführungsbeispiel können die erste Elektrode und die zweite Elektrode zumindest in einem Bereich, in dem die Deckschicht die beiden Elektroden überdeckt, im Wesentlichen parallel zueinander verlaufen. In diesem Bereich können die beiden Elektroden mit ungefähr konstantem Abstand nebeneinander angeordnet sein. Die Elektroden können in diesem Bereich jeweils eine oder mehrere Krümmungen und/oder Knickstellen und/oder Ecken aufweisen. Beispielsweise können beide Elektroden zumindest in diesem Bereich mäandrierend verlaufen. Es können auch mehrere solcher Bereiche vorhanden sind, die räumlich voneinander getrennt auf dem Träger angeordnet sind. In diesem einen oder den mehreren Bereichen kann sich jede Elektrode ohne Abzweigungsstelle erstrecken. Zwischen jeweils zwei solcher Bereichen können Abzweigstellen vorhanden sein. Durch eine oder mehrere solcher Bereiche können beispielsweise Formen, Symbole, Buchstaben oder dergleichen gebildet werden.

Bei einer derartigen Ausgestaltung können Abschnitte der ersten Elektrode und/oder der zweiten Elektrode unmittelbar benachbart und parallel zueinander verlaufen, während bei einer Interdigitalanordnung vorzugsweise jeweils Elektrodenfinger unterschiedlicher Elektroden unmittelbar benachbart zueinander angeordnet sind.

Zumindest einige der ersten Zwischenräume und der zweiten Zwischenräume sind bevorzugt derart dimensioniert, dass ausreichend Platz für Einstichstellen des wenigstens einen dritten Fadens der Deckschicht verbleibt. Mehrere Einstichstellen der gestickten Deckschicht, an denen der wenigstens eine dritte Faden den Träger durchsticht, sind vorzugsweise in den ersten bzw. zweiten Zwischenräumen benachbart zu den Elektrodenfingern angeordnet. Die Einstichstellen des wenigstens einen dritten Fadens durchsetzen weder den wenigstens einen ersten Faden der ersten Elektrode, noch den wenigstens einen zweiten Faden der zweiten Elektrode.

Der wenigstens eine dritte Faden der Deckschicht weist mehrere Stiche mit jeweils mindestens einer Kontaktstelle auf, die als Überbrückungsstiche bezeichnet werden. Jeder Überbrückungsstich hat vorzugsweise eine Kontaktstelle mit dem wenigstens einen ersten Faden und eine Kontaktstelle mit dem wenigstens einen zweiten Faden.

Bei einem Ausführungsbeispiel kann jeder Überbrückungsstich jeweils einen der ersten Elektrodenfinger und einen der zweiten Elektrodenfinger übergreifen. Bevorzugt übergreift ein Überbrückungsstich genau einen ersten Elektrodenfinger und genau einen zweiten Elektrodenfinger. Der Überbrückungsstich erstreckt sich zwischen zwei Einstichstellen, die auf entgegengesetzten Seiten der darunter angeordneten Elektrodenfinger angeordnet sind.

Bei einer Ausführungsform übergreifen die Überbrückungsstiche, die einen bestimmten bzw. betrachteten ersten Elektrodenfinger übergreifen jeweils nur einen der unmittelbar benachbart angeordneten zweiten Elektrodenfinger. Dadurch kann eine Überbrückungsstichgruppe aus Überbrückungsstichen gebildet werden, deren Einstichstellen auf zwei parallel zueinander verlaufenden Linien angeordnet sind, wobei diese Linien parallel zu dem zugeordneten ersten Elektrodenfinger und dem zugeordneten zweiten Elektrodenfinger ausgerichtet sind. Bei einer alternativen Ausführungsform wird über die Überbrückungsstiche, die einen bestimmten bzw. betrachteten ersten Elektrodenfinger übergreifen, Kontakt zu zwei unmittelbar benachbarten zweiten Elektrodenfingern hergestellt. Dazu übergreifen einige dieser Überbrückungsstiche den ersten Elektrodenfinger und den einen zweiten Elektrodenfinger und einige andere der Überbrückungsstiche den erste Elektrodenfinger und den anderen zweiten Elektrodenfinger. Die Überbrückungsstiche sind in einer Richtung rechtwinklig zur Erstreckungsrichtung des Elektrodenfingers versetzt zueinander angeordnet und überlappen sich in dem Bereich, in dem sich der erste Elektrodenfinger erstreckt.

Die Anordnung der Überbrückungsstiche, die vorstehend im Zusammenhang mit einem betrachteten ersten Elektrodenfinger beschrieben wurde, kann entsprechend für einen betrachteten zweiten Elektrodenfinger vorhanden sein.

Es ist außerdem bevorzugt, wenn der wenigstens eine dritte Faden der Deckschicht den wenigstens einen ersten Faden und den wenigstens einen zweiten Faden ausschließlich an den Elektrodenfingern übergreift. Der dritte Faden übergreift die erste Elektrode und die zweite Elektrode daher nicht im Bereich der ersten Basiszone bzw. der zweiten Basiszone.

Bei einem Ausführungsbeispiel kann der Sensor als Potentiometer ausgebildet sein. Dabei ist es insbesondere vorteilhaft, wenn die erste Basiszone der ersten Elektrode oder die zweite Basiszone der zweiten Elektrode eine Widerstandszone bildet. Der Widerstand entlang der Widerstandszone kann in eine Erstreckungsrichtung der Widerstandszone ausgehend vom betreffenden Anschluss der Elektrode weg zunehmen. Der Widerstand zwischen einem Elektrodenfinger und dem Anschluss kann durch den zunehmenden Widerstand der Widerstandszone umso größer sein, je weiter der Elektrodenfinger vom betreffenden Anschluss entfernt ist. Dadurch kann der Gesamtwiderstand des Sensors zwischen dem ersten Anschluss der ersten Elektrode und dem zweiten Anschluss der zweiten Elektrode abhängig davon variieren, an welcher Stelle durch Krafteinwirkung eine elektrisch leitende bzw. besser leitende Verbindung zwischen den beiden Elektroden hergestellt wird.

Bei sämtlichen Ausführungsformen kann auf dem Träger zusätzlich zu der ersten Elektrode und der zweiten Elektrode wenigstens ein Abstandselement vorhanden sein, das zwischen dem Träger und der Deckschicht angeordnet ist. Das Abstandselement befindet sich auf dem Träger neben der ersten Elektrode und der zweiten Elektrode, beispielsweise in einen Zwischenraum zwischen den beiden Elektroden. Mittels des wenigstens einen Abstandselements kann der Abstand zwischen der Deckschicht und dem Träger bzw. zwischen der Deckschicht einerseits und der ersten Elektrode und der zweiten Elektrode andererseits für einen Ausgangszustand vorgegeben werden, in der keine äußere Kraft auf die Deckschicht wirkt. Durch das wenigstens eine Abstandselement kann zum Beispiel der Kontakt zwischen der Deckschicht und der ersten Elektrode und/oder der zweiten Elektrode im Ausgangszustand unterbunden oder vermindert werden.

Bei einer bevorzugten Ausführungsform kann das wenigstens eine Abstandselement durch wenigstens einen Abstandsfaden gebildet sein. Der wenigstens eine Abstandsfaden kann auf den Träger genäht oder gestickt werden.

Der Abstandsfaden ist zumindest in dem Bereich zwischen oder neben den Elektroden angeordnet, in dem sich die Deckschicht befindet. Der Abstandsfaden befindet sich dort zwischen der Deckschicht und dem Träger. Der Abstandsfaden kann beispielsweise in wenigstens einem ersten Zwischenraum und/oder wenigstens einem zweiten Zwischenraum angeordnet sein. Der Abstandsfaden ist vorzugsweise elektrisch nicht leitend. Die Dicke bzw. Stärke des Abstandsfadens ist vorzugsweise größer als die Dicke bzw. Stärke des wenigstens einen ersten Fadens und des wenigstens eine zweiten Fadens. Durch den Abstandsfaden kann der Kontakt zwischen dem wenigstens einen dritten Faden und dem wenigstens einen zweiten Faden bzw. zwischen dem wenigstens einen dritten Faden und dem wenigstens einen ersten Faden im Ruhezustand, ohne Krafteinwirkung auf den Sensor reduziert werden.

Durch ein oder mehrere der vorstehenden Ausführungsbeispiele der Erfindung wird ein sehr flach aufgebauter Sensor erreicht. Der Materialeinsatz zur Herstellung des Sensors ist gering und es fällt nur wenig Abfall bei der Herstellung an. Der Messbereich und/oder die Messempfindlichkeit können durch eine oder mehrere der Folgenden Eigenschaften bestimmt werden:

- die Wahl des Fadens bzw. des Garns oder des Zwirns für den erste Faden und/oder den zweiten Faden und/oder den dritten Faden;
- die Anordnung der Elektroden und/oder der Überbrückungsstiche der Decklage;
- die Anordnung der Überbrückungsstiche der Decklage;
- Integration des zusätzlichen Abstandsfadens.

Der erfindungsgemäße Sensor kann auch mit einem oder mehreren weiteren gestickten Sensoren in einem gemeinsamen Ablauf auf einer Nähmaschine oder Stickmaschine hergestellt werden, beispielsweise mit einem weiteren erfindungsgemäßen Sensor oder einem Feuchtigkeitssensor. Der erfindungsgemäße Sensor kann beim Sticken auch mit anderen gestickten elektrischen Funktionsbereichen, wie Zuleitungen und/oder Heizungen kombiniert werden.

Vorteilhafte Ausgestaltungen der Erfindung ergeben sich aus den abhängigen Ansprüchen, der Beschreibung und den Zeichnungen. Bevorzugte Ausführungsformen der Erfindung werden nachfolgend anhand der Zeichnungen im Einzelnen erläutert. Es zeigen:

Figur 1 eine schematische Ansicht eines Trägers, einer durch einen erste Faden gebildeten ersten Elektrode sowie einer durch einen zweiten Faden gebildeten zweiten Elektrode,

Figur 2 eine schematische Darstellung eines Sensors mit dem Träger und den Elektroden aus Figur 1 sowie einer Deckschicht aus einem dritten Faden, der in Kontakt ist mit der ersten Elektrode und der zweiten Elektrode,

Figuren 3 und 4 jeweils eine schematische Ansicht weiterer Ausführungsbeispiele des Sensors gemäß Figur 2, wobei die Stiche der Deckschicht anders angeordnet sind als beim Ausführungsbeispiel gemäß Figur 2,

Figur 5 eine schematische Prinzipdarstellung eines Überbrückungsstiches des dritten Fadens der Deckschicht, der einen ersten Faden der ersten Elektrode und einen zweiten Faden der zweiten Elektrode übergreift,

Figur 6 die Darstellung aus Figur 5 während einer Druckeinwirkung auf den dritten Faden,

Figur 7 ein elektrisches Ersatzschaltbild eines Gesamtwiderstand eines Überbrückungsstiches des wenigstens einen dritten Fadens, der sich abhängig vom Einwirken einer Kraft ändert,

Figur 8 eine schematische Darstellung eines Träger, auf dem eine erste Elektrode und eine zweite Elektrode gestickt sind, wobei zwischen den beiden Elektroden ein Abstandsfaden auf den Träger gestickt oder genäht ist,

Figur 9 eine schematische Prinzipdarstellung eines Überbrückungsstiches des dritten Fadens wie eines ersten Fadens, eines zweiten Fadens und eines Abstandsfadens bei dem Ausführungsbeispiel gemäß Figur 8,

Figur 10 eine schematische Prinzipdarstellung eines von dem Sensor gebildeten Potentiometers,

Figur 11 ein Ersatzschaltbild des in Figur 10 veranschaulichten Potentiometers,

Figur 12 eine schematische Ansicht eines Trägers, einer durch einen erste Faden gebildeten ersten Elektrode sowie einer durch einen zweiten Faden gebildeten zweiten Elektrode und

Figur 13 eine schematische Darstellung eines weiteren Ausführungsbeispiels Sensors mit dem Träger und den Elektroden aus Figur 12 sowie einer Deckschicht aus einem dritten Faden, der in Kontakt ist mit der ersten Elektrode und der zweiten Elektrode.

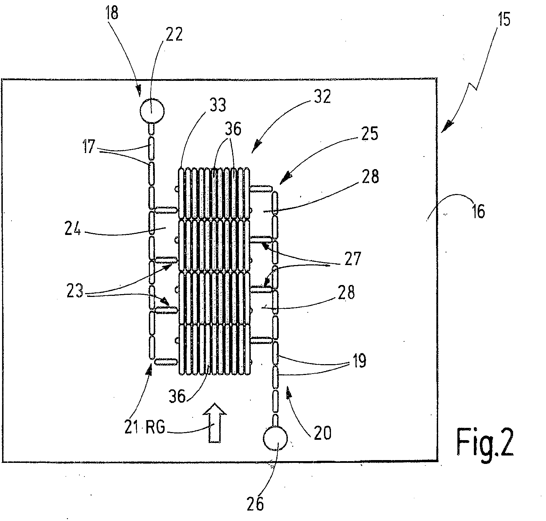

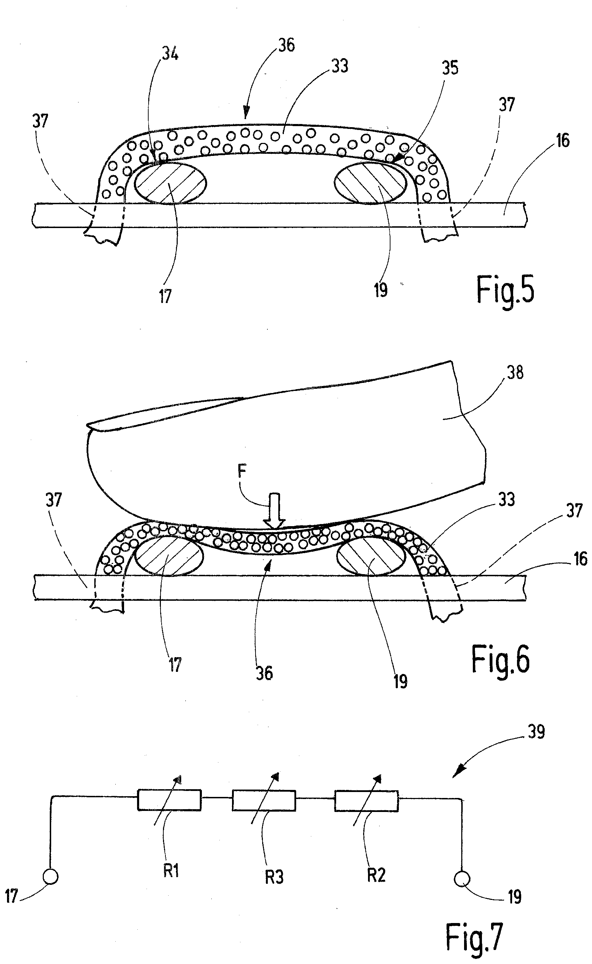

Die Erfindung betrifft einen Sensor 15, der durch Sticken hergestellt werden kann. In den Figuren 2 bis 4, 8 und 10 sind unterschiedliche Ausführungsbeispiele eines Sensors 15 jeweils schematisch dargestellt. Der Sensor 15 ist dazu eingerichtet, eine auf den Sensor 15 einwirkende Kraft F (Figur 6) zu erfassen oder zu messen. Dabei kann entweder nur das Vorhandensein einer äußeren Krafteinwirkung detektiert bzw. festgestellt werden oder optional zusätzlich eine Sensorgröße erzeugt werden, die abhängig ist vom Betrag der einwirkenden Kraft und/oder von der Stelle, an der die Kraft F einwirkt.

Der Sensor 15 kann als gestickter Sensor 15 bezeichnet werden. Er weist einen Träger 16 auf, der vorzugsweise als textiler Träger 16 ausgeführt ist. Der Träger 16 ist allgemein ein Flächengebilde und hat somit in einer Erstreckungsebene eine Länge und eine Breite, die um eine oder mehrere Größenordnungen größer sind, als eine Dicke des Trägers 16 rechtwinklig zu seiner Erstreckungsebene. Der Träger 16 kann aus Kunststoffmaterial und/oder Naturmaterial hergestellt sein. Bevorzugt ist der Träger 16 als Textilträger ausgeführt, z.B. als Gestrick und/oder Gewirke und/oder Gewebe und/oder Vliesmaterial. Der Träger 16 kann Bestandteil eines Kleidungsstücks oder einer anderen Textiloberfläche sein.

Auf den Träger 16 wird unter Verwendung wenigstens eines ersten Fadens 17 eine erste Elektrode 18 durch Sticken erzeugt. In den Figuren sind schematisch die einzelnen Stiche beim Blick auf eine Seite des Trägers 16 veranschaulicht, die durch den wenigstens einen ersten Faden 17 auf dem Träger 16 erzeugt werden. Der wenigstens eine erste Faden 17 weist elektrisch leitende Bestandteile auf, wie zum Beispiel elektrisch leitende Fasern, Filamente oder Füllstoffe. Als elektrisch leitendes Material kann Silber, Edelstahl oder Kohlenstoff oder eine Kombination davon verwendet werden. Der wenigstens eine erste Faden 17 kann auch eine elektrisch leitende Beschichtung aufweisen.

Unter Verwendung wenigstens eines zweiten Fadens 19 wird auf den Träger 16 und beispielsgemäß auf derselben Seite des Trägers 16 eine zweite Elektrode 20 durch Sticken erzeugt. Der wenigstens eine zweite Faden 19 weist elektrisch leitende Bestandteile auf und kann derart aufgebaut sein, wie es vorstehend für den ersten Faden 17 erläutert wurde. Der wenigstens eine erste Faden 17 und der wenigstens eine zweite Faden 19 weisen vorzugsweise dieselbe elektrische Leitfähigkeit auf und können identisch sein.

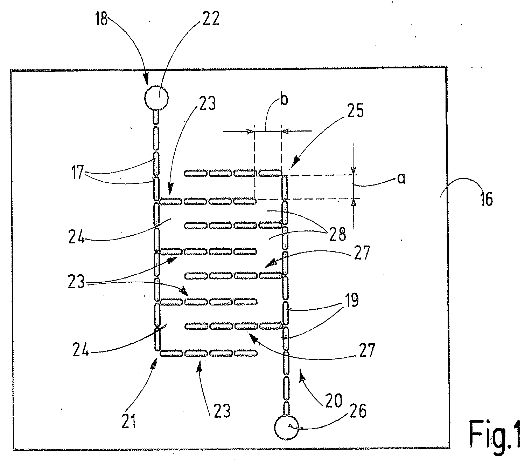

Wie es insbesondere in Figur 1 veranschaulicht ist, sind die erste Elektrode 18 und die zweite Elektrode 20 bei einigen Ausführungsbeispielen (Figuren 1-4, 8, 10) interdigital angeordnet. Dazu weist die erste Elektrode 18 eine erste Basiszone 21 auf, die sich ausgehend von einem ersten Anschluss 22 weg erstreckt, beispielsweise geradlinig. Quer und vorzugsweise rechtwinklig von der ersten Basiszone 21 ragen mehrere erste Elektrodenfinger 23 weg. Die ersten Elektrodenfinger 23 sind in gleichmäßigen Abständen parallel zueinander angeordnet. Zwischen zwei unmittelbar benachbarten ersten Elektrodenfingern 23 ist ein erster Zwischenraum 24 gebildet. Die Anzahl der ersten Elektrodenfinger 23 und mithin die Anzahl der ersten Zwischenräume 24 kann abhängig von der realisierten Größe des Sensors variieren. Auch die Länge der Basiszone 21 bzw. die Länge der ersten Elektrodenfinger 23 kann variieren. Beim Ausführungsbeispiel sind alle ersten Elektrodenfinger 23 gleich lang.

Die zweite Elektrode, die aus dem wenigstens einen zweiten Faden 19 hergestellt ist, ist analog zur ersten Elektrode 18 aufgebaut. Sie weist eine zweite Basiszone 25 auf, die sich ausgehend von einem zweiten Anschluss 26 wegerstreckt, beispielsgemäß geradlinig. Die erste Basiszone 21 und die zweite Basiszone 25 verlaufen bevorzugt parallel zueinander und sind mit Abstand zueinander angeordnet. Mehrere zweite Elektrodenfinger 27 ragen quer und vorzugsweise rechtwinklig von der zweiten Basiszone 25 weg. Die zweiten Elektrodenfinger 27 sind beim Ausführungsbeispiel parallel zueinander und in gleichmäßigen Abständen zueinander angeordnet. Sie sind bevorzugt gleich lang. Zwischen zwei unmittelbar benachbarten zweiten Elektrodenfingern 27 ist jeweils ein zweiter Zwischenraum 28 gebildet.

Für das Sticken der Basiszonen 21, 25 und das Sticken der Elektrodenfinger 23, 27 können Fäden aus unterschiedlichen Materialien verwendet werden. Die erste Elektrode 18 kann beispielsweise aus zwei unterschiedlichen (insbesondere unterschiedlich leitfähigen) ersten Fäden und die zweite Elektrode 20 aus zwei unterschiedlichen (insbesondere unterschiedlich leitfähigen) zweiten Fäden gestickt werden.

Beim Ausführungsbeispiel sind die ersten Elektrodenfinger 23 und die zweiten Elektrodenfinger 27 parallel zueinander angeordnet. In einen, mehrere oder alle ersten Zwischenräume 24 ragt wenigstens ein und beispielsgemäß genau ein zweiter Elektrodenfinger 27. In einen, mehrere oder alle zweiten Zwischenräume 28 ragt wenigstens ein und beispielsgemäß genau ein erster Elektrodenfinger 23. In einer Richtung parallel zur Erstreckung der ersten Basiszone 21 und der zweiten Basiszone 25 sind daher abwechselnd immer ein erster Elektrodenfinger 23 und ein zweiter Elektrodenfinger 27 angeordnet.

Zwischen der ersten Elektrode 18 und der zweiten Elektrode 20 ist ein Abstand vorhanden, so dass sich der wenigstens eine erste Faden 17 und der wenigstens eine zweite Faden 19 nicht unmittelbar berühren. Beim Ausführungsbeispiel ist zwischen jedem ersten Elektrodenfinger 23 und einem unmittelbar benachbarten zweiten Elektrodenfinger 27, parallel zur Erstreckungsrichtung der Basiszonen 21, 25 betrachtet, ein erster Abstand a vorhanden. Parallel zur Erstreckungsrichtung der Elektrodenfinger 23, 27 betrachtet, ist zwischen dem freien Ende der ersten Elektrodenfinger 23 und der zweiten Basiszone 25 ein zweiter Abstand b vorhanden. Entsprechend kann zwischen dem freien Ende der zweiten Elektrodenfinger 27 derselbe zweite Abstand b vorhanden sein. Bei einem Ausführungsbeispiel sind der erste Abstand a und der zweite Abstand b betragsmäßig gleich groß.

Wie bereits erläutert, besteht kein unmittelbarer Kontakt und keine unmittelbar elektrisch leitende Verbindung zwischen der ersten Elektrode 18 und der zweiten Elektrode 20. Der Träger 16 ist zumindest in dem Bereich, in dem darauf die Elektroden 18, 20 angeordnet sind, elektrisch nicht leitend oder zumindest nicht derart ausgebildet, dass er einen mittelbaren elektrischen Kontakt zwischen den beiden Elektroden herstellt.

Ein mittelbarer Kontakt und eine mittelbare elektrisch leitende Verbindung zwischen der ersten Elektrode 18 und der zweiten Elektrode 20 kann über eine Deckschicht 32 hergestellt werden. Die Deckschicht 32 ist dadurch gebildet, dass wenigstens ein dritter Faden 33 auf den Träger 16 gestickt wird. Analog zum wenigstens einen ersten Faden und zum wenigstens einen zweiten Faden weist der wenigstens eine dritte Faden elektrisch leitfähige Bestandteile auf und kann einen Aufbau aufweisen, wie er im Zusammenhang mit dem ersten Faden 17 einleitend beschrieben wurde. Bevorzugt ist der wenigstens eine dritte Faden 33 verschieden vom wenigstens einem ersten Faden 17 und vom wenigstens einen zweiten Faden 19. Insbesondere ist die elektrische Leitfähigkeit des wenigstens einen dritten Fadens 33 anders als die elektrische Leitfähigkeit der Fäden 17, 19 der Elektroden 18, 20. Beispielsgemäß ist die elektrische Leitfähigkeit des wenigstens einen dritten Fadens 33 - zumindest in einem Zustand, in dem keine äußere Kraft auf den wenigstens einen dritten Faden 33 einwirkt - kleiner als die elektrische Leitfähigkeit des ersten Fadens 17 und des zweiten Fadens 19. Bei einem Ausführungsbeispiel hat der wenigstens eine dritte Faden 33 elektrisch leitfähige Bestandteile, wie etwa Füllstoffe und/oder Fasern und/oder Filamente, deren Abstand sich bei einer äußeren Einwirkung ändert, wodurch die Leitfähigkeit des wenigstens einen dritten Fadens 33 verändert wird und vorzugsweise zunimmt.

Der wenigstens eine dritte Faden 33 übergreift die erste Elektrode 18 und die zweite Elektrode 20 an mehreren Stellen und bildet dadurch mehrere erste Kontaktstelen 34 mit dem wenigstens einen ersten Faden 17 und mehrere zweite Kontaktstellen 35 mit dem wenigstens einen zweiten Faden 19. Jede erste Kontaktstelle 34 hat einen ersten Übergangswiderstand R1 zwischen dem ersten Faden 17 und dem dritten Faden 33 und jede zweite Kontaktstelle 35 hat einen zweiten Übergangswiderstand R2 zwischen dem zweiten Faden 19 und dem dritten Faden 33. Der wenigstens eine dritte Faden 33 kann einen veränderbaren Durchgangswiderstand R3 aufweisen.

Wie es anhand der Figuren 5 bis 7 schematisch veranschaulicht ist, kann durch Einwirken einer Kraft F auf die Deckschicht 32 der Kontakt zwischen dem wenigstens einen dritten Faden 33 und dem wenigstens einen ersten Faden 17 bzw. dem wenigstens einen zweiten Faden 19 verbessert werden, so dass der erste Übergangswiderstand R1 und der zweite Übergangswiderstand R2 kleiner werden. Optional zusätzlich kann durch die Krafteinwirkung der Durchgangswiderstand R3 des dritten Fadens 33 verringert werden, beispielsweise indem elektrisch leitfähige Bestandteile des dritten Fadens 33 durch die einwirkende Kraft F untereinander eine bessere elektrische Verbindung entlang der Erstreckung des dritten Fadens 33 herstellen, wodurch seine Leitfähigkeit erhöht bzw. sein Durchgangswiderstand R3 zwischen einer ersten Kontaktstelle 34 und einer unmittelbar benachbarten zweiten Kontaktstelle 35 verringert wird.

Wie es in den Figuren 2 bis 4 schematisch veranschaulicht ist, bildet der wenigstens eine dritte Faden 33 der Deckschicht 32 durch das Sticken auf den Träger 16 mehrere Stiche, die als Überbrückungsstiche 36 bezeichnet werden, die jeweils eine erste Kontaktstelle 34 und eine zweite Kontaktstelle 35 aufweisen, und die beim Ausführungsbeispiel jeweils einen ersten Elektrodenfinger 23 und einen unmittelbar benachbarten zweiten Elektrodenfinger 27 übergreifen. Es ist bevorzugt, wenn jeder Überbrückungsstich 36 genau einen ersten Elektrodenfinger 23 und genau einen zweiten Elektrodenfinger 27 übergreift. Dadurch kann ein Überbrückungsstich 36 zwischen seinen beiden Einstichstellen 37 sehr kurz gehalten werden.

Ein Überbrückungsstich 36 zwischen zwei Einstichstellen 37 ist schematisch in den Figuren 5 und 6 veranschaulicht. Die Figuren 2 bis 4 zeigen unterschiedliche Stickmuster, die zum Anordnen der Überbrückungsstiche 36 der Deckschicht 32 verwendet werden können. Bei der in Figur 2 gezeigten Ausführungsform ist jedem ersten Elektrodenfinger 23 genau ein zweiter Elektrodenfinger 27 zugeordnet, die ein gemeinsames Elektrodenfingerpaar bilden. Ein Elektrodenfingerpaar 23, 27 ist durch eine Überbrückungsstichgruppe aus mehreren Überbrückungsstichen 36 übergriffen. Überbrückungsstiche 36, die Elektrodenfinger unterschiedlicher Elektrodenfingerpaare miteinander verbinden, sind nicht vorhanden. Zum Beispiel sind die Überbrückungsstiche 36, die einem gemeinsamen Elektrodenfingerpaar 23, 27 zugeordnet sind, derart angeordnet, dass die Einstichstellen 37 entlang zweier paralleler Linien ausgerichtet sind, wobei diese Linien sich parallel zu den Elektrodenfingern 23, 27 des Elektrodenfingerpaars erstrecken. Die Überbrückungsstiche 36 bilden somit jeweils eine Überbrückungsstichgruppe für ein Elektrodenfingerpaar, wobei die Überbrückungsstichgruppen sich in einer Richtung parallel zur Erstreckungsrichtung der Basiszonen 21, 25 nicht überlappen und entweder mit Kontakt oder mit Abstand aneinander anschließen.

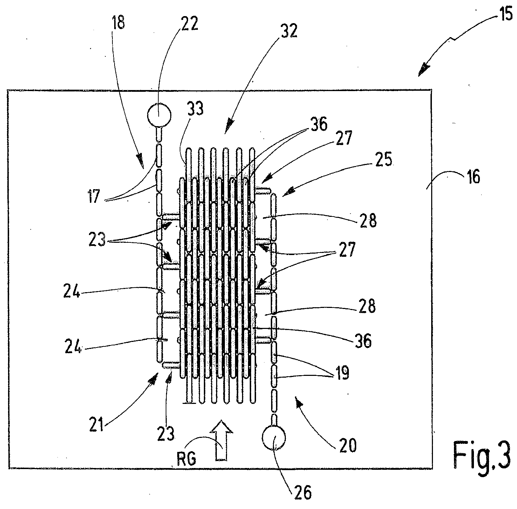

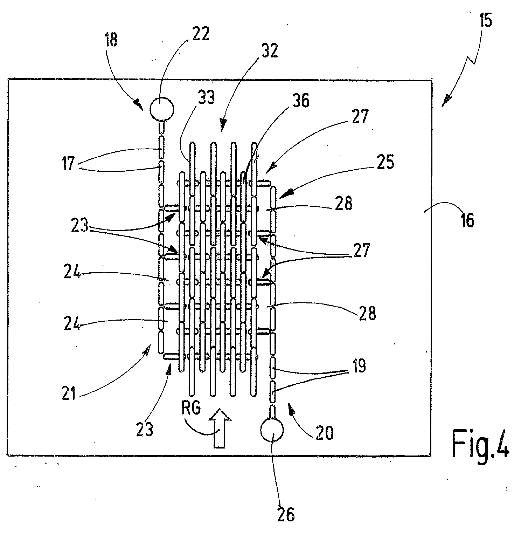

In den Figuren 3 und 4 ist eine alternative Ausführungsform gezeigt. Die Überbrückungsstiche 36 sind parallel zur Erstreckungsrichtung der Basiszonen 21, 25 versetzt zueinander angeordnet. Dadurch ist ein erster Elektrodenfinger 23, der in einen zweiten Zwischenraum 28 hineinragt, durch mehrere Überbrückungsstiche 36 mit dem einen unmittelbar benachbarten zweiten Elektrodenfinger 27 und durch mehrere andere Überbrückungsstiche 36 mit dem jeweils anderen unmittelbar benachbarten zweiten Elektrodenfinger 27 gekoppelt. Dadurch kann die elektrische Verbindung zwischen der ersten Elektrode 18 und der zweiten Elektrode 20 durch die Deckschicht 32 zumindest bei Einwirken einer äußeren Kraft F verbessert werden.

Die Stickdichte der Überbrückungsstiche 36 kann variieren.

Der Unterschied zwischen der Ausführung gemäß Figur 3 und der Ausführung gemäß Figur 4 besteht darin, dass beim Ausführungsbeispiel gemäß Figur 3 Überbrückungsstiche 36, die rechtwinkelig zur Erstreckungsrichtung der Basiszonen 21, 25 in einer Reihe bzw. Linie angeordnet sind, im Wesentlichen ohne Abstand aneinander anschließen, während die Überbrückungsstiche 36 in dieser Richtung beim Ausführungsbeispiel gemäß Figur 4 einen Abstand zueinander aufweisen.

Abgesehen von der Anordnung der Überbrückungsstiche 36 sind die Ausführungsbeispiele gemäß den Figuren 2 bis 4 identisch ausgeführt.

Bei den hier veranschaulichten, bevorzugten Ausführungsbeispielen weist jeder Überbrückungsstich 36 wenigstens eine Einstichstelle 37 auf, die sich in einem ersten Zwischenraum 24 und einem zweiten Zwischenraum 28 befindet. Alle Einstichstellen 37 sind benachbart zu den betreffenden Elektrodenfingern 23, 27 angeordnet und durchsetzen weder den wenigstens einen ersten Faden 17, noch den wenigstens einen zweiten Faden 19.

Die Deckschicht 32 ist in Erstreckungsrichtung der Elektrodenfinger 23, 27 betrachtet, bei einigen Ausführungsbeispielen (Figuren 1-4, 8 und 10) auf den Bereich zwischen der ersten Basiszone 21 und der zweiten Basiszone 25 beschränkt. Der dritte Faden 33 übergreift bevorzugt weder die erste Basiszone 21, noch die zweite Basiszone 25. Die ersten Kontaktstellen 34 und die zweiten Kontaktstellen 35 sind ausschließlich an den Elektrodenfingern 23 bzw. 27 vorhanden, an denen der wenigstens eine dritte Faden 33 die Elektroden 18, 20 übergreift.

In Figur 7 ist schematisch ein elektrisches Ersatzschaltbild für einen Widerstand zwischen einem ersten Faden 17 und einem zweiten Faden 19 veranschaulicht, die über genau eine erste Kontaktstelle 34 und genau eine zweite Kontaktstelle 35 durch einen einzigen Überbrückungsstich 36 miteinander verbunden sind. Dieser Widerstand ist durch die Reihenschaltung des ersten Übergangswiderstands R1, des Durchgangswiderstands R3 und des zweiten Übergangswiderstands R2 gebildet. Die Beträge sämtlicher Einzelwiderstände R1, R3, R2 dieser Reihenschaltung, zumindest jedoch die Beträge der beiden Übergangswiderstände R1, R2 sind abhängig von der einwirkenden Kraft F veränderbar.

Wie es schematisch in Figur 6 veranschaulicht ist, kann das Einwirken der Kraft F beispielsweise durch Drücken mit der Kuppe eines Fingers 38 auf die Deckschicht 32 erzeugt werden. Die Kraft F wirkt dabei in der Regel nicht nur auf einen einzigen Überbrückungsstich 36 der Deckschicht 32 ein, sondern auf eine Mehrzahl von Überbrückungsstichen 36. Somit werden mehrere Reihenschaltungen von einem ersten Übergangswiderstand R1, einem Durchgangswiderstand R3 und einem zweiten Übergangswiderstand R2, wie sie in Figur 7 schematisch veranschaulicht ist, durch das Einwirken auf die mehreren Überbrückungsstiche 36 parallel geschaltet. Dann ergibt sich ein Gesamtwiderstand RG zwischen dem ersten Anschluss 22 und dem zweiten Anschluss 26 durch die Parallelschaltung von mehreren Reihenschaltungen, von denen eine schematisch mit Figur 7 veranschaulicht ist.

Der Gesamtwiderstand RG wird auch ohne Einwirkung einer äußeren Kraft F von einer Vielzahl von parallel geschalteten Reihenschaltungen 39 gemäß Figur 7 gebildet, wenn durch die Deckschicht 32 ohne Einwirkung einer äußeren Kraft F bereits eine elektrisch leitende Verbindung zwischen den beiden Elektroden 18, 20 hergestellt ist, deren Gesamtwiderstand RG durch das Einwirken der Kraft F verändert und insbesondere verringert werden kann.

Wenn bereits ohne Einwirken einer äußeren Kraft F eine elektrisch leitende Verbindung zwischen den beiden Anschlüssen 22, 26 hergestellt ist, kann auch ohne das Einwirken einer äußeren Kraft F eine Unterbrechungsfreiheit der elektrischen Verbindung geprüft werden.

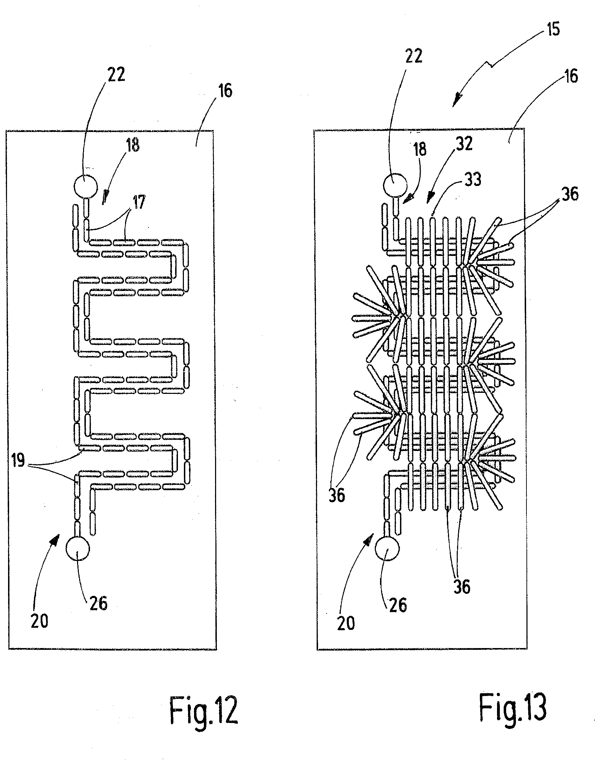

In den Figuren 12 und 13 ist ein weiteres Ausführungsbeispiel der Ausführungsform eines Sensors 15 veranschaulicht, wobei zur besseren Übersicht in Figur 12 die Deckschicht 32 weggelassen wurde und nur die Elektroden 18, 20 veranschaulicht sind. Die beiden Elektroden 18, 20 erstrecken sich bei dieser Ausführungsform zumindest in einem Abschnitt, in dem die Deckschicht 32 auf den Träger aufgebracht wird, mit Abstand in etwa parallel zueinander, beim Ausführungsbeispiel schlangenlinienförmig bzw. mäandrierend. Durch diesen mäandrierenden Verlauf sind beispielsweise zwischen zwei parallel verlaufenden Abschnitten der ersten Elektrode 18 zwei in etwa parallel verlaufende Abschnitte der zweiten Elektrode 20 angeordnet. Der genaue Verlauf und die Form der Elektroden 18, 20 kann variieren und beispielsweise Buchstaben, Zahlen oder Symbole bilden. Die Überbrückungsstiche 36 der Deckschicht 32 übergreifen jeweils die erste Elektrode 18 und die zweite Elektrode 20 entlang ihrer Erstreckung. In Figur 13 ist schematisch eine Deckschicht 32 mit geringer Dichte an Überbrückungsstichen 36 gezeigt, um das Prinzip des Sensoraufbaus zu veranschaulichen. Die Dichte der Überbrückungsstiche 36 kann auch höher sein.

Die Einstichlöcher der Überbrückungsstiche 36 der Deckschicht 32 sind bei dem in Figur 13 veranschaulichten Ausführungsbeispiel benachbart oder zwischen zwei Abschnitten derselben Elektrode 18 oder 20 angeordnet. Abhängig von der Formgebung des Verlaufs der Elektroden 18, 20 kann ausreichend Platz für eine höhere oder geringe Stichdichte der Überbrückungsstiche 36 geschaffen werden. Es ist bevorzugt, wenn die Abstände zwischen den Einstichstellen der Überbrückungsstiche 36 so gering wie möglich ist, um die Fläche optimal auszunutzen. Die Einstichstellen der Überbrückungsstiche 36 dürfen die darunterliegenden Elektroden 18, 20 allerdings nicht beschädigen oder versehentlich kurzschließen.

Durch die mäandrierende Form der Elektroden 18, 20 besteht die Möglichkeit, die gesamte von den Elektroden 18, 20 eingenommene Fläche mit einer Deckschicht 32 zu versehen und als drucksensitive Fläche zu verwenden. Die Anzahl der Überbrückungsstellen pro Flächeneinheit ist geringer als bei der zuvor beschriebenen Interdigitalanordnung, wie sie beispielsweise in den Figuren 1 bis 4 veranschaulicht ist.

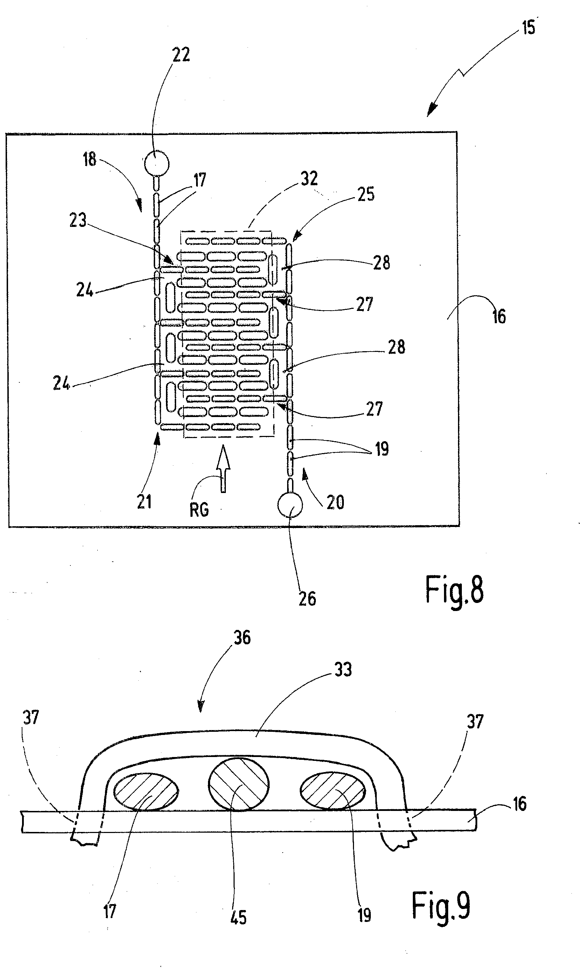

In den Figuren 8 und 9 ist eine weitere Ausgestaltungsmöglichkeit des Sensors 15 schematisch veranschaulicht, die mit allen anderen Ausführungsformen des Sensors 15 kombiniert werden kann. Auf dem Träger 16 ist bei dieser Ausführungsform ein Abstandsfaden 45 gestickt. Der Abstandsfaden 45 befindet sich auf dem Träger 16 auf derselben Seite bzw. in derselben Ebene wie die erste Elektrode 18 und die zweite Elektrode 20. Die Stärke bzw. der Durchmesser des Abstandsfadens 45 ist größer als die Stärke bzw. der Durchmesser des wenigstens einen ersten Fadens 17 und des wenigstens einen zweiten Fadens 19. Der Abstandsfaden 45 ist zumindest dort auf dem Träger 16 aufgestickt, wo sich die Deckschicht 32 befindet. Bevorzugt übergreift jeder Überbrückungsstich 36 der Deckschicht 32 einen Abschnitt des Abstandfadens 45. Ohne das Einwirken einer äußeren Kraft wird der maximale Abstand des dritten Fadens 33 eines Überbrückungsstiches 36 vom Träger 16 gegenüber einer Variante ohne Abstandsfaden 45 vergrößert und der erste Übergangswiderstand R1 und der zweite Übergangswiderstand R2 vergrößert. Der erste Übergangswiderstand R1 und/oder der zweite Übergangswiderstand R2 können dabei derart vergrößert werden, dass kein messbarer Stromfluss zwischen dem ersten Anschluss 22 und dem zweiten Anschluss 26 bei üblicherweise für Sensoren verwendeten Spannungs- und Stromstärken stattfindet - der erste Übergangswiderstand R1 und/oder der zweite Übergangswiderstand R2 können sozusagen unendlich groß sein, solange keine äußere Kraft einwirkt, wenn an den Kontaktstellen 34, 35 ohne äußere Kraft ein Abstand zwischen dem dritten Faden 33 und dem ersten Faden 17 bzw. dem zweiten Faden 19 vorhanden ist.

Es versteht sich, dass in einem Fall, in dem für das Sticken der Elektroden 18, 20 jeweils mehrere Fäden verwendet werden, die ein Fadenbündel bilden, der wenigstens eine Abstandsfaden 45 bzw. ein Abstandsfadenbündel von mehreren Abstandsfäden 45 verwendet wird, dessen Gesamtstärke größer ist als die Gesamtstärke der Faserbündel aus ersten Fäden 17 bzw. zweiten Fäden 19.

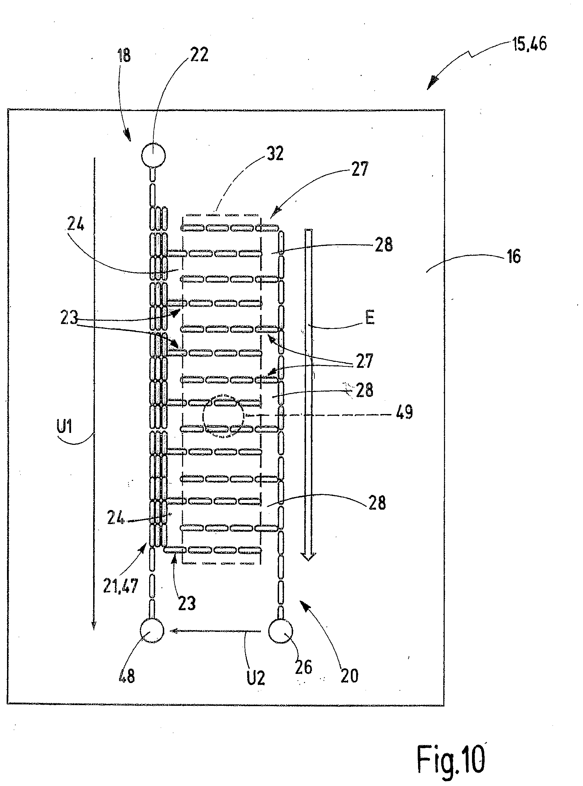

Mittels der Sticktechnik kann auch ein Sensor 15 hergestellt werden, der ein Potentiometer 46 darstellt (Figur 10). Bei dem Potentiometer 46 ist wenigstens eine Basiszone und beispielsgemäß die erste Basiszone 21 als Widerstandszone 47 ausgestaltet. Die Widerstandszone 47 hat eine geringere Leitfähigkeit als die übrigen Teile der ersten Elektrode 18. Das kann beispielsweise dadurch erreicht werden, dass die Widerstandszone 47 aus einem Faden gestickt wird, der eine geringere Leitfähigkeit aufweist als der zum Sticken der ersten Elektrodenfinger 23 verwendete Faden. An der dem ersten Anschluss 22 entgegengesetzten Seite ist ein dritter Anschluss 48 elektrisch mit der Widerstandszone 47 verbunden. Zwischen dem ersten Anschluss 22 und dem dritten Anschluss 48 ist somit ein durch die Widerstandszone 47 bereitgestellter maximaler Potentiometerwiderstand gebildet.

Wie im Zusammenhang mit der ersten Basiszone 21 beschrieben, gehen an unterschiedlichen Stellen der Widerstandszone 47 die ersten Elektrodenfinger 23 weg. Die zweite Elektrode 20 ist analog zu den vorstehend beschriebenen Ausführungsbeispielen ausgeführt.

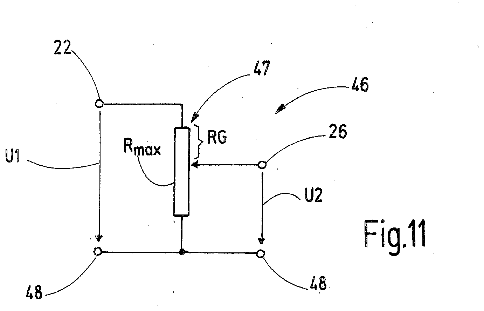

Wenn an einer Einwirkungsstelle 49 eine Kraft F auf die Deckschicht 32 einwirkt, findet dort eine elektrische Kopplung zwischen wenigstens einem ersten Elektrodenfinger 23 und wenigstens einem zweiten Elektrodenfinger 27 statt. Abhängig davon, wo sich die Einwirkungsstelle 49 in der Erstreckungsrichtung E der Widerstandszone 47 befindet, ändert sich der variable Gesamtwiderstand RG zwischen dem ersten Anschluss 22 und dem zweiten Anschluss 26. In Figur 11 ist schematisch ein Ersatzschaltbild für das Potentiometer 46 aus Figur 10 veranschaulicht. Der Gesamtwiderstand RG wird im Wesentlichen durch den Teil der Widerstandszone 47 gebildet, der sich zwischen der Einwirkungsstelle 49 und dem ersten Anschluss 22 erstreckt.

Zwischen dem ersten Anschluss 22 und dem dritten Anschluss 48 eine erste Spannung U1 angelegt wird, kann zwischen dem zweiten Anschluss 26 und dem dritten Anschluss 48 eine zweite Spannung U2 gemessen werden, die abhängig ist von der Position der Einwirkungsstelle 49 in Erstreckungsrichtung E. Dabei gilt:

$$\frac{U1}{R_{max}} = \frac{U2}{R_{max}-RG}$$

Die Erfindung betrifft einen Sensor 15, der durch Sticken mit Fäden 17, 19, 33 auf einen Träger 16 hergestellt ist. Durch das Sticken werden eine erste Elektrode 18, eine zweite Elektrode 20 sowie eine Deckschicht 32 gebildet. Über die Deckschicht 32 kann eine elektrisch leitende Verbindung zwischen der ersten Elektrode 18 und der zweiten Elektrode 20 hergestellt werden, zumindest wenn eine Kraft F auf die Deckschicht 32 einwirkt und zumindest einen Teil der Deckschicht 32 gegen einen Teil der ersten Elektrode 18 und der zweiten Elektrode 20 drückt. Diese Kraft F kann durch einen auf die Deckschicht 32 lokal ausgeübten Druck und/oder durch Biegen der Deckschicht 32 bzw. des Trägers 16 hervorgerufen werden. Der gesamte Sensor 15 und insbesondere die erste Elektrode 18, die zweite Elektrode 20 sowie die Deckschicht 32 sind ausschließlich durch Sticken auf einen gemeinsamen Träger 16 hergestellt. Der Sensor lässt sich besonders einfach und kostengünstig herstellen und ist robust.

Durch die Erfindung können auch sehr flach aufgebaute Sensoren 20 erreicht werden. Der Materialeinsatz zur Herstellung des Sensors 15 ist gering und es fällt nur wenig Abfall bei der Herstellung an. Durch die Wahl des Fadens bzw. des Garns oder des Zwirns für den erste Faden und/oder den zweiten Faden und/oder den dritten Faden kann der Messbereich und die Messempfindlichkeit des Sensors 15 gewählt werden. Der Messbereich und die Messempfindlichkeit können auch durch die Anordnung der Elektroden 18, 20 und/oder der Überbrückungsstiche 36 der Decklage 32 variiert werden. Anstelle der beispielsgemäß veranschaulichten interdigitalen Anordnung der Elektroden 18, 20 sind auch andere beliebige Formen zur Bildung der Elektroden 18, 20 möglich. Beispielsweise können die Elektrodenfinger 23, 27 auch wenigstens eine Krümmungsstelle und/oder wenigstens eine Knickstelle aufweisen. Die Basiszonen 21, 25 müssen nicht zwangsweise geradlinig verlaufen, sondern können auch wenigstens eine Krümmungsstelle und/oder wenigstens eine Knickstelle aufweisen. Die Basiszonen 21, 25 können auch eine Fläche umschließen oder einnehmen, beispielsweise eine kreisförmige oder polygonale Fläche. Der erfindungsgemäße Sensor kann auch mit einem oder mehreren weiteren gestickten Sensoren in einem gemeinsamen Ablauf auf einer Nähmaschine oder Stickmaschine hergestellt werden, beispielsweise mit einem weiteren erfindungsgemäßen Sensor oder einem Feuchtigkeitssensor. Der erfindungsgemäße Sensor kann beim Sticken auch mit anderen gestickten elektrischen Funktionsbereichen, wie Zuleitungen und/oder Heizungen kombiniert werden.

Bezugszeichenliste:

| 15 | Sensor |
|----|--------|
| 16 | Träger |
| 17 | erster Faden |
| 18 | erste Elektrode |
| 19 | zweiter Faden |
| 20 | zweite Elektrode |
| 21 | erste Basiszone |
| 22 | erster Anschluss |
| 23 | erster Elektrodenfinger |
| 24 | erster Zwischenraum |
| 25 | zweite Basiszone |
| 26 | zweiter Anschluss |
| 27 | zweiter Elektrodenfinger |
| 28 | zweiter Zwischenraum |

| 32 | Deckschicht |
|----|-------------|
| 33 | dritter Faden |
| 34 | erste Kontaktstelle |
| 35 | zweite Kontaktstelle |
| 36 | Überbrückungsstich |
| 37 | Einstichstelle |
| 38 | Finger |
| 39 | Reihenschaltung |

| 45 | Abstandsfaden |
|----|---------------|
| 46 | Potentiometer |
| 47 | Widerstandszone |
| 48 | dritter Anschluss |

| a | erster Abstand |
|---|----------------|
| b | zweiter Abstand |
| E | Erstreckungsrichtung der Widerstandszone |
| F | Kraft |
| R1 | erster Übergangswiderstand |
| R2 | zweiter Übergangswiderstand |
| R3 | Durchgangswiderstand |
| RG | Gesamtwiderstand |
| $R_{max}$ | maximaler Potentiometerwiderstand |

**Patentansprüche**

1. Sensor (15), der dazu eingerichtet ist, eine auf den Sensor (15) einwirkende Kraft (F) zu erfassen und/oder zu messen, wobei der Sensor (15) aufweist:

    - einen Träger (16),
    - eine erste Elektrode (18), die durch wenigstens einen auf den Träger (16) gestickten ersten Faden (17) gebildet ist, der elektrisch leitfähige Bestandteile aufweist,
    - eine zweite Elektrode (20), die durch wenigstens einen auf den Träger (16) gestickten zweiten Faden (19) gebildet ist, der elektrisch leitfähige Bestandteile aufweist, wobei die beiden Elektroden (18, 20) mit Abstand zueinander auf dem Träger (16) angeordnet sind,
- eine Deckschicht (32), die durch wenigstens einen auf den Träger (16) gestickten dritten Faden (33) gebildet ist, der elektrisch leitfähige Bestandteile aufweist, wobei der wenigstens eine dritte Faden (33) der Deckschicht (32) an mehreren Kontaktstellen (34, 35) am wenigstens einen ersten Faden (17) der ersten Elektrode (18) und am wenigstens einen zweiten Faden (19) der zweiten Elektrode (20) anliegt,

**dadurch gekennzeichnet, dass** die erste Elektrode (18) eine erste Basiszone (21) und mehrere von der ersten Basiszone (21) wegragende erste Elektrodenfinger (23) aufweist, wobei zwischen zwei unmittelbar benachbarten ersten Elektrodenfingern (23) jeweils ein erster Zwischenraum (24) gebildet ist, dass die zweite Elektrode (20) eine zweite Basiszone (25) und mehrere von der zweiten Basiszone (25) wegragende zweite Elektrodenfinger (27) aufweist, wobei zwischen zwei unmittelbar benachbarten zweiten Elektrodenfingern (27) jeweils ein zweiter Zwischenraum (28) gebildet ist.

2. Sensor nach Anspruch 1,
**dadurch gekennzeichnet, dass** auf dem Träger (16) und/oder an dem Träger (16) neben den Elektroden (18, 20) wenigstens ein Abstandselement vorhanden ist, das den Abstand zwischen dem Träger (16) und der Deckschicht (32) vorgibt.

3. Sensor nach Anspruch 2,
**dadurch gekennzeichnet, dass** das wenigstens eine Abstandselement durch einen Abstandsfaden (45) gebildet ist, der auf den Träger (16) genäht oder gestickt ist.

4. Sensor nach einem der vorhergehenden Ansprüche,
**dadurch gekennzeichnet, dass** der Sensor (15) einen Gesamtwiderstand (RG) zwischen einem ersten Anschluss (22) der ersten Elektrode (18) und einem zweiten Anschluss (26) der zweiten Elektrode (20) aufweist, dessen Betrag abhängig ist von einer auf die Deckschicht (32) einwirkenden Kraft (F).

5. Sensor nach Anspruch 4,
**dadurch gekennzeichnet, dass** der Gesamtwiderstand (RG) abhängt von einem ersten Übergangswiderstand (R1) zwischen dem wenigstens einen ersten Faden (17) der ersten Elektrode (18) und dem wenigstens einen dritten Faden (33) der Deckschicht (32), und von einem zweiten Übergangswiderstand (R2) zwischen dem wenigstens einen zweiten Faden (19) der zweiten Elektrode (20) und dem wenigstens einen dritten Faden (33) der Deckschicht (32).

6. Sensor nach Anspruch 4 oder 5,
**dadurch gekennzeichnet, dass** der Gesamtwiderstand (RG) abhängt von einem Durchgangswiderstand (R3) des wenigstens einen dritten Fadens (33), dessen Betrag abhängig ist von einer auf den wenigstens einen dritten Faden der Deckschicht (32) einwirkenden Kraft (F).

7. Sensor nach einem der vorhergehenden Ansprüche,
**dadurch gekennzeichnet, dass** wenigstens ein zweiter Elektrodenfinger (27) in einen ersten Zwischenraum (24) hineinragt und dass wenigstens ein erster Elektrodenfinger (23) in einen zweiten Zwischenraum (28) hineinragt.

8. Sensor nach einem der vorhergehenden Ansprüche,
**dadurch gekennzeichnet, dass** mehrere Einstichstellen (37) der gestickten Deckschicht (32), an denen der wenigstens eine dritte Faden (33) in den Träger (16) einsticht, in den ersten und/oder zweiten Zwischenräumen (24, 28) angeordnet sind.

9. Sensor nach Anspruch 8,
**dadurch gekennzeichnet, dass** der wenigstens eine dritte Faden (33) der Deckschicht (32) mehrere Überbrückungsstiche (36) aufweist, die jeweils einen der ersten Elektrodenfinger (23) und einen der zweiten Elektrodenfinger (27) übergreifen.

10. Sensor nach Anspruch 9,
**dadurch gekennzeichnet, dass** einige der Überbrückungsstiche (36), die einen der ersten Elektrodenfinger (23) übergreifen, einen von zwei unmittelbar benachbarten zweiten Elektrodenfingern (27) übergreifen, und andere der Überbrückungsstiche (36), die diesen ersten Elektrodenfinger (23) übergreifen, den anderen der zwei unmittelbar benachbarten zweiten Elektrodenfinger (27) übergreifen.

11. Sensor nach einem der vorhergehenden Ansprüche,
**dadurch gekennzeichnet, dass** der wenigstens eine dritte Faden (33) der Deckschicht (32) den wenigstens einen ersten Faden (17) und den wenigstens einen zweiten Faden (19) zumindest überwiegend an den Elektrodenfingern (23, 27) übergreift.

12. Sensor nach einem der vorhergehenden Ansprüche,
**dadurch gekennzeichnet, dass** der Sensor (15) als Potentiometer (47) ausgeführt ist.

**13.** Sensor nach Anspruch 12, **dadurch gekennzeichnet, dass** die erste Basiszone (21) der ersten Elektrode (18) oder die zweite Basiszone (25) der zweiten Elektrode (20) eine Widerstandszone (47) bildet, und dass der Sensor (15) einen Gesamtwiderstand (RG) zwischen einem ersten Anschluss (22) der ersten Elektrode (18) und einem zweiten Anschluss (26) der zweiten Elektrode (20) aufweist, wobei der Gesamtwiderstand (RG) sich abhängig davon ändert, an welcher Stelle eine Kraft (F) auf die Deckschicht (32) einwirkt.

**Claims**

**1.** Sensor (15) configured to detect and/or measure a force (F) applied on the sensor (15), wherein the sensor (15) comprises:

- a carrier (16),
- a first electrode (18) that is formed by at least one first thread (17) that is embroidered on the carrier (16) and that comprises electrically conductive components,
- a second electrode (20) that is formed by at least one second thread (19) that is embroidered on the carrier (16) and that comprises electrically conductive components, wherein the two electrodes (18, 20) are arranged with distance to one another on the carrier (16),
- a cover layer (32) that is formed by at least one third thread (33) that is embroidered on the carrier (16) and that comprises electrically conductive components, wherein the at least one third thread (33) of cover layer (32) is in abutment with the at least one first thread (17) of first electrode (18) and the at least one second thread (19) of second electrode (20) at multiple contact sites (34, 35),

**characterized in that** the first electrode (18) has a first base zone (21) and multiple first electrode fingers (23) extending away from the first base zone (21), wherein a first interstice (24) is formed between two directly adjacent first electrode fingers (23) respectively, that the second electrode (20) comprises a second base zone (25) and multiple second electrode fingers (27) extending away from the second base zone (25), wherein a second interstice (28) is formed between two directly adjacent second electrode fingers (27) respectively.

**2.** Sensor according to claim 1, **characterized in that** at least one distance element is present on the carrier (16) and/or at the carrier (16) adjacent to the electrodes (18, 20) that defines the distance between the carrier (16) and the cover layer (32).

**3.** Sensor according to claim 2, **characterized in that** the at least one distance element is realized by a distance thread (45) that is sewn or embroidered on the carrier (16).

**4.** Sensor according to any of the preceding claims, **characterized in that** the sensor (15) comprises a total resistance (RG) between a first connection (22) of first electrode (18) and a second connection (26) of second electrode (20), the amount of which depends on a force (F) acting on the cover layer (32).

**5.** Sensor according to claim 4, **characterized in that** the total resistance (RG) depends on a first contact resistance (R1) between the at least one first thread (17) of first electrode (18) and the at least one third thread (33) of cover layer (32) and on a second contact resistance (R2) between the at least one second thread (19) of second electrode (20) and the at least one third thread (33) of cover layer (32).

**6.** Sensor according to claim 4 or 5, **characterized in that** the total resistance (RG) depends on a flow resistance (R3) of the at least one third thread (33), the amount of which depends on a force (F) acting on the at least one third thread of cover layer (32).

**7.** Sensor according to any of the preceding claims, **characterized in that** at least one second electrode finger (27) extends into a first interstice (24) and that at least one first electrode finger (23) extends into a second interstice (28).

**8.** Sensor according to any of the preceding claims, **characterized in that** multiple puncture sites (37) of the embroidered cover layer (32) where the at least one third thread (33) penetrates the carrier (16) are arranged in the first and/or second interstices (24, 28).

**9.** Sensor according to claim 8, **characterized in that** the at least one third thread (33) of cover layer (32) comprises multiple bridging stitches (36) that extend over a first electrode finger of the first electrode fingers (23) and a second electrode finger of the second electrode fingers (27) respectively.

**10.** Sensor according to claim 9, **characterized in that** some of the bridging stitches (36) that extend over one of the first electrode fingers (23) extend over one of two directly adjacent second electrode fingers (27) and other bridging stitches (36) that extend over this first electrode finger (23) extend over the other of the two directly adjacent second electrode fingers (27).

**11.** Sensor according to any of the preceding claims, **characterized in that** the at least one third thread (33) of cover layer (32) extends over the at least one first thread (17) and the at least one second thread (19) at least predominantly at the electrode fingers (23, 27).

12. Sensor according to any of the preceding claims, **characterized in that** the sensor (15) is configured as potentiometer (46).

13. Sensor according to claim 12, **characterized in that** the first base zone (21) of the first electrode (18) or the second base zone (25) of the second electrode (20) forms a resistance zone (47) and that the sensor (15) comprises a total resistance (RG) between a first connection (22) of first electrode (18) and a second connection (26) of second electrode (20), wherein the total resistance (RG) changes depending on the location where a force (F) acts on the cover layer (32).

**Revendications**

1. Capteur (15) qui est conçu pour détecter et/ou mesurer une force (F) agissant sur le capteur (15), ledit capteur (15) comprenant :

   - un support (16),
   - une première électrode (18) qui est constituée d'au moins un premier fil (17) brodé sur le support (16) et présentant des composants électriquement conducteurs,
   - une deuxième électrode (20) qui est constituée d'au moins un deuxième fil (19) brodé sur le support (16) et présentant des composants électriquement conducteurs, les deux électrodes (18, 20) étant disposées à distance l'une de l'autre sur le support (16),
   - une couche de recouvrement (32) qui est constituée d'au moins un troisième fil (33) brodé sur le support (16) et présentant des composants électriquement conducteurs, le troisième fil (33), au nombre d'au moins un, de la couche de recouvrement (32) étant appliqué en plusieurs emplacements de contact (34, 35) contre le premier fil (17), au nombre d'au moins un, de la première électrode (18) et contre le deuxième fil (19), au nombre d'au moins un, de la deuxième électrode (20),

   **caractérisé en ce que** la première électrode (18) présente une première zone de base (21) et plusieurs premiers doigts d'électrode (23) s'étendant à partir de la première zone de base (21), sachant qu'entre deux premiers doigts d'électrode (23) directement adjacents, est formé respectivement un premier espace intermédiaire (24), **en ce que** la deuxième électrode (20) présente une deuxième zone de base (25) et plusieurs deuxièmes doigts d'électrode (27) s'étendant à partir de la deuxième zone de base (25), sachant qu'entre deux deuxièmes doigts d'électrode (27) directement adjacents, est formé respectivement un deuxième espace intermédiaire (28).

2. Capteur selon la revendication 1, **caractérisé en ce qu'**il est prévu sur le support (16) et/ou au niveau du support (16), à coté des électrodes (18, 20), au moins un élément d'espacement qui prédéfinit l'espacement entre le support (16) et la couche de recouvrement (32).

3. Capteur selon la revendication 2, **caractérisé en ce que** l'élément d'espacement, au nombre d'au moins un, est constitué d'un fil d'espacement (45) qui est cousu ou brodé sur le support (16).

4. Capteur selon une des revendications précédentes, **caractérisé en ce que** le capteur (15) présente une résistance totale (RG) entre une première borne (22) de la première électrode (18) et une deuxième borne (26) de la deuxième électrode (20), dont la valeur est fonction d'une force (F) agissant sur la couche de recouvrement (32).

5. Capteur selon la revendication 4, **caractérisé en ce que** la résistance totale (RG) est fonction d'une première résistance de contact (R1) entre le premier fil (17), au nombre d'au moins un, de la première électrode (18) et le troisième fil (33), au nombre d'au moins un, de la couche de recouvrement (32), et d'une deuxième résistance de contact (R2) entre le deuxième fil (19), au nombre d'au moins un, de la deuxième électrode (20) et le troisième fil (33), au nombre d'au moins un, de la couche de recouvrement (32).

6. Capteur selon la revendication 4 ou 5, **caractérisé en ce que** la résistance totale (RG) est fonction d'une résistance de passage (R3) du troisième fil (33), au nombre d'au moins un, dont la valeur dépend d'une force (F) agissant sur le troisième fil, au nombre d'au moins un, de la couche de recouvrement (32).

7. Capteur selon une des revendications précédentes, **caractérisé en ce qu'**au moins un deuxième doigt d'électrode (27) avance dans un premier espace intermédiaire (24), et **en ce qu'**au moins un premier doigt d'électrode (23) avance dans un deuxième espace intermédiaire (28).

8. Capteur selon une des revendications précédentes, **caractérisé en ce que** plusieurs points de piquage (37) de la couche de recouvrement (32) brodée, auxquels le troisième fil (33), au nombre d'au moins un, pique dans le support (16), sont disposés dans les premiers et/ou deuxièmes espaces intermédiaires (24, 28).

9. Capteur selon la revendication 8, **caractérisé en ce que** le troisième fil (33), au nombre d'au moins un, de la couche de recouvrement (32) présente plusieurs points de franchissement (36) qui passent respectivement au-dessus de l'un des premiers doigts d'électrode (23) et de l'un des deuxièmes doigts d'électrode (27).

10. Capteur selon la revendication 9, **caractérisé en ce que** quelques-uns des points de franchissement (36), qui passent au-dessus de l'un des premiers doigts d'électrode (23), passent au-dessus d'un doigt parmi deux deuxièmes doigts d'électrode (27) directement adjacents, et d'autres points parmi les points de franchissement (36) qui passent au-dessus de ce premier doigt d'électrode (23) passent au-dessus de l'autre doigt des deux deuxièmes doigts d'électrode (27) directement adjacents.

11. Capteur selon une des revendications précédentes, **caractérisé en ce que** le troisième fil (33), au nombre d'au moins un, de la couche de recouvrement (32) passe au-dessus du premier fil (17), au nombre d'au moins un, et du deuxième fil (19), au nombre d'au moins un, au moins en majeure partie au niveau des doigts d'électrode (23, 27).

12. Capteur selon une des revendications précédentes, **caractérisé en ce que** le capteur (15) est réalisé sous forme de potentiomètre (47).

13. Capteur selon la revendication 12, **caractérisé en ce que** la première zone de base (21) de la première électrode (18) ou la deuxième zone de base (25) de la deuxième électrode (20) constitue une zone de résistance (47), et **en ce que** le capteur (15) présente une résistance totale (RG) entre une première borne (22) de la première électrode (18) et une deuxième borne (26) de la deuxième électrode (20), la résistance totale (RG) variant en fonction de l'endroit où une force (F) agit sur la couche de recouvrement (32).

Fig.1

Fig.2

Fig.3

Fig.4

Fig.5

Fig.6

Fig.7

Fig.8

Fig.9

Fig.10

Fig.11

Fig.12

Fig.13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030119391 A1
- GB 2343516 A
- US 20080307899 A1
- US 20160328043 A1
- US 9816799 B2
- US 20170261388 A1
- US 8701578 B2
- US 20160048235 A1

- US 7770473 B2
- US 8505474 B2
- US 7145432 B2
- US 8661915 B2
- US 8904876 B2
- US 20040173028 A1
- DE 102013001772 A1

**In der Beschreibung aufgeführte Nicht-Patentliteratur**

- Design and manufacture of textile-based sensors. **BOSOWSKI, P et al.** Electronic Textiles. Elsevier, 2015, 75-107
- **MEYER, JAN** ; **LUKOWICZ, PAUL** ; **TROSTER, GERHARD**. Textile pressure sensor for muscle activity and motion detection. *Wearable Computers, 10th IEEE International Symposium*, 2006, 69-72
- **MEYER, JAN et al.** Design and modeling of a textile pressure sensor for sitting posture classification. *IEEE Sensors Journal*, 2010, vol. 10 (8), 1391-1398
- Contactless EMG sensors embroidered onto textile. **LINZ, TORSTEN** ; **GOURMELON, LENA** ; **LANGE-REIS, GEERT**. 4th International Workshop on Wearable and Implantable Body Sensor Networks. Springer, 2007, 29-34
- Joining technologies for electronic textiles. **MECNI-KA, V et al.** Electronic Textiles. Elsevier, 2015, 133-153

- **HASANI, M et al.** Implementation of a dual-interrogationmode embroidered RFID-enabled strain sensor. *IEEE Antennas and Wireless Propagation Letters*, 2013, vol. 12, 1272-1275
- **ZHANG, LANLIN et al.** Embroidered textiles for RF electronics and medical sensors. *Wireless Information Technology and Systems (ICWITS),2012 IEEE International Conference*, 2012, 1-4
- **KOO, HYE RAN et al.** The effect of textile-based inductive coil sensor positions for heart rate monitoring. *Journal of medical systems*, 2014, vol. 38 (2), 2
- **MECNIKA, VIKTORIJA et al.** Preliminary Study on Textile Humidity Sensors. *Smart SysTech 2015; European Conference on Smart Objects, Systems and Technologies; Proceedings of. VDE9*, 2015, 1-9
- **GRIES, THOMAS** ; **KLOPP, KAI**. Füge- und Oberflächentechnologien für textilien: Verfahren und anwendungen. Springer-Verlag, 2007